## Europäisches Patentamt

## European Patent Office

## Office européen des brevets

(11) Veröffentlichungsnummer: **0 109 544**

**B1**

(12) **EUROPÄISCHE PATENTSCHRIFT**

(45) Veröffentlichungstag der Patentschrift:
31.05.89

(51) Int. Cl.⁴: **H 02 B 11/02**

(21) Anmeldenummer: **83110288.4**

(22) Anmeldetag: **15.10.83**

(54) Verriegelungsvorrichtung für einen Einschub.

(30) Priorität: **22.11.82 DE 3243106**

(43) Veröffentlichungstag der Anmeldung:
**30.05.84 Patentblatt 84/22**

(45) Bekanntmachung des Hinweises auf die Patenterteilung:
**31.05.89 Patentblatt 89/22**

(84) Benannte Vertragsstaaten:
**AT BE CH DE GB LI NL SE**

(56) Entgegenhaltungen:
**FR-A-2 420 863**
**GB-A-825 707**

(73) Patentinhaber: **BBC Brown Boveri AG, Haselstrasse, CH- 5401 Baden (CH)**

(72) Erfinder: **Grass, Hermann, Grenzhofer Strasse76, D-6803 Edingen (DE)**
Erfinder: **Fischer, Dieter, Kurt- Schuhmacher- Strasse 1, D-6940 Weinheim (DE)**

(74) Vertreter: **Rupprecht, Klaus, Dipl.- Ing., c/o BBC Brown Boveri Aktiengesellschaft ZPT Postfach 100351 Kallstadter Strasse 1, D-6800 Mannheim 1 (DE)**

LIBER, STOCKHOLM 1989

## Beschreibung

Die Erfindung betrifft eine Verriegelungsvorrichtung zur Verriegelung eines Einschubes in einem Einschubfach eines elektrischen Schaltschrankes gemäß Oberbegriff des Patentanspruches 1.

Verriegelungsvorrichtungen der eingangs genannten Art dienen dazu, einen Einschub in den entsprechenden Stellungen "Einschub vollständig eingeschoben", "Betriebsstellung", "Teststellung" und "Trennstellung" festzuhalten. Sofern der Einschub ein sogenannter Leistungseinschub ist, bei dem also hohe Ströme und hohe Spannungen auftreten, ist im allgemeinen ein Leistungs- oder Lastschalter vorgesehen, der zum Ein- und Ausschalten der am Einschub anstehenden Spannung bzw. des dort fließenden Stromes dient. Die Verriegelungsvorrichtung muß dabei so mit dem Schaltgerät zusammenwirken, daß ein Herausziehen des Einschubes nur dann erfolgen kann, wenn das Schaltgerät ausgeschaltet ist.

Eine Verriegelung der eingangs genannten Art ist aus der GB-A-825 707 bekannt geworden. Dort ist eine Welle über zwei Hebelanordnungen mit je einer Stange gekuppelt, welche Stangen durch Drehen der Welle beidseitig aus dem Einschub herausbewegt werden können, um den Einschub, der in einer Schaltanlage untergebracht ist, in einer bestimmten Stellung festlegen zu können. Zusätzlich ist eine unabhängig von der Verriegelung betätigbare Blockiervorrichtung für den Einschub vorgesehen.

Aufgabe der Erfindung ist es, eine Verriegelungsvorrichtung mit einer Blockiereinrichtung für die Verriegelung zu schaffen, die gegenüber den bekannten Vorrichtungen verbessert ist.

Diese Aufgabe wird erfindungsgemäß dadurch gelöst, daß das Stangengetriebe ein Zahnstangengetriebe mit zwei Zahnstangen und die Welle als beide Zahnstangen antreibendes Ritzel ausgebildet ist, und daß die Blockiervorrichtung abhängig von der Stellung der Schaltwelle des Schaltgerätes die Verriegelung blockiert, in dem eine von der Schaltwelle betätigte Verriegelungsstange mit einer von wenigstens einer Ausnehmung an einer der Zahnstangen in Eingriff bringbar ist, wobei die Verriegelungsstange selbst wiederum die Schaltwelle dann in Ausschaltstellung festhält, wenn sich die Verriegelungsvorrichtung und damit die Zahnstangen außerhalb vorbestimmter Stellungen befinden.

Aufgrund des Vorsehens der Verriegelungseinrichtung in Verbindung mit der Blockiereinrichtung wird erreicht, daß der Schalter nur dann betätigt werden kann, wenn sich die Verriegelung in einer bestimmten Stellung befindet.

Eine vorteilhafte Ausgestaltung der Erfindung geht dahin, daß am vorderen Bereich des Einschubes eine Halteleiste vorgesehen ist, an der die Verriegelungsvorrichtung und die Blockiervorrichtung angeordnet sind, wobei in weiterer Ausgestaltung der Erfindung auf der Oberseite der Halteleiste ein durch den Schaltknebel betätigbares Getriebe vorgesehen ist, das auf das Zahnstangengetriebe zur Verschiebung der beiden Zahnstangen gegeneinander einwirkt.

Eine vorteilhafte Ausgestaltung kann dahingehen, daß das Getriebe zur Betätigung der beiden Zahnstangen zwischen zwei auf der Halteleiste befestigten, senkrecht zu dieser verlaufenden, quasi ein Gehäuse bildenden Tragblechen geführt und gehaltert ist. Hierdurch können insbesondere Verletzungen bei der Betätigung der Verriegelungsvorrichtung vermieden werden.

Um eine Betätigung der Verriegelungsvorrichtung und damit ein Herausziehen des Einschubes unter Strom zu verhindern, ist am Schaltgerät ein mit der Schaltwelle fest verbundener Hebel vorgesehen, der in ausgeschaltetem Zustand des Schaltgerätes in die Blockiervorrichtung eingreift und diese in dem die Verriegelungsvorrichtung blockierenden Zustand festhält.

Eine besonders vorteilhafte Ausgestaltung der Erfindung geht dahin, daß die Blockiervorrichtung mit der unterhalb der Halteleiste quer zur Bewegungsrichtung der Zahnstangen verlaufenden und geführt verschiebbaren Verriegelungsstange einen mit der Verriegelungsstange gelenkig verbundenen Übertragungshebel umfaßt, der mit einem ersten Ende in den Bewegungsweg des mit der Schaltwelle verbundenen Hebels eingreift und mit diesem bei einem Schaltvorgang in Eingriff gelangt, so daß die Verriegelungsstange bei einer Ausschalthandlung außer Eingriff mit einer der beiden Zahnstangen gelangt und diese so freigibt.

In der Halteleiste ist vorteilhafter Weise ein Schlitz vorgesehen, in den der mit der Schaltwelle verbundene Hebel bei einem Ausschaltvorgang eingreift und dabei mit dem anderen Ende des Übertragungshebels, an dem zur Verringerung von Reibungswirkungen eine Rolle drehbeweglich angeordnet sein kann, in Berührung gelangt.

Eine vorteilhafte Ausgestaltung der Erfindung kann dahingehen, daß der Übertragungshebel als Doppelhebel ausgebildet und um den Anlenkpunkt an der Verriegelungsstange drehbar ist, und daß auf das andere Ende auf einer Seite der Anlenkstelle eine Feder so einwirkt, daß das eine, erste Ende in die Bewegungsbahn des mit der Schaltwelle verbundenen Hebels eingedrückt ist.

In besonders vorteilhafter Weise kann der Schlitz zwei Bereiche mit unterschiedlicher Breite aufweisen, wobei der mit der Schaltwelle verbundene Hebel beim Ausschaltvorgang zuerst in den Bereich mit größerer Breite eintaucht und im Bereich mit geringerer Breite bei weiterem Ausschalten geführt ist. Dadurch wird eine vorteilhafte Führung der Rolle innerhalb des Schlitzes bewirkt.

Um einen einfachen Aufbau zu erhalten, sind das Getriebe an einem Ende der Halteleiste und die Blockiervorrichtung in der Nähe des anderen Endes angeordnet; die eine der beiden Zahnstangen übergreift dabei die gesamte Länge der Halteleiste und ist dabei mit Ausnehmungen im Bereich der Blockiereinrichtung versehen.

Mit der Erfindung wird also eine Verriegelungsvorrichtung zur Verriegelung eines Einschubes in einem Einschubfach eines elektrischen Schaltschrankes angegeben, die ein Zahnstangengetriebe und eine mit dem Zahnstangengetriege zusammenwirkende Blockiereinrichtung besitzt, die ein auf dem Einschub angebrachtes Schaltgerät in einer vorbestimmten Stellung der Verriegelungseinrichtung in Ausschaltstellung festhält, in anderen Stellungen der Verriegelungsvorrichtung jedoch frei gibt. Zu diesem Zwecke weist die Blockiereinrichtung eine Verriegelungsstange auf, die mit Ausnehmungen in einer der Zahnstangen zusammenwirkt, wobei ein mit der Schaltwelle des Schaltgerätes verbundener Hebel auf diesen Übertragungshebel beim Ausschaltvorgang einwirkt, so daß die Verriegelungsstange aus den Ausnehmungen herausgezogen wird. In dieser Lage wird auch der Hebel von der Verriegelungsstange in Ausschaltstellung festgehalten.

Anhand der Zeichnung, in der ein Ausführungsbeispiel der Erfindung dargestellt ist, sollen die Erfindung sowie weitere vorteilhafte Ausgestaltungen und Verbesserungen näher erläutert und beschrieben werden.

Fig. 1    eine Aufsicht auf eine Verriegelungsvorrichtung,
Fig. 2    eine Aufsicht in Pfeilrichtung A auf die Vorrichtung nach Fig. 1,

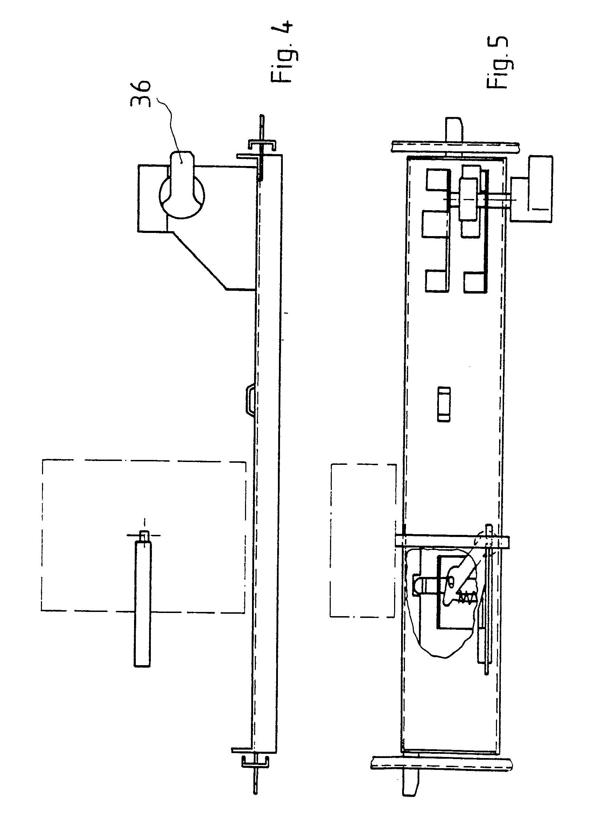

Fig. 3    eine Aufsicht in Pfeilrichtung B auf die Vorrichtung nach Fig. 1 und
Fig. 4    je eine Frontansicht und eine Aufsicht auf die Vorrichtung nach Fig. 1, in unterschiedlichen Schalt- bzw. Verriegelungsstellungen.

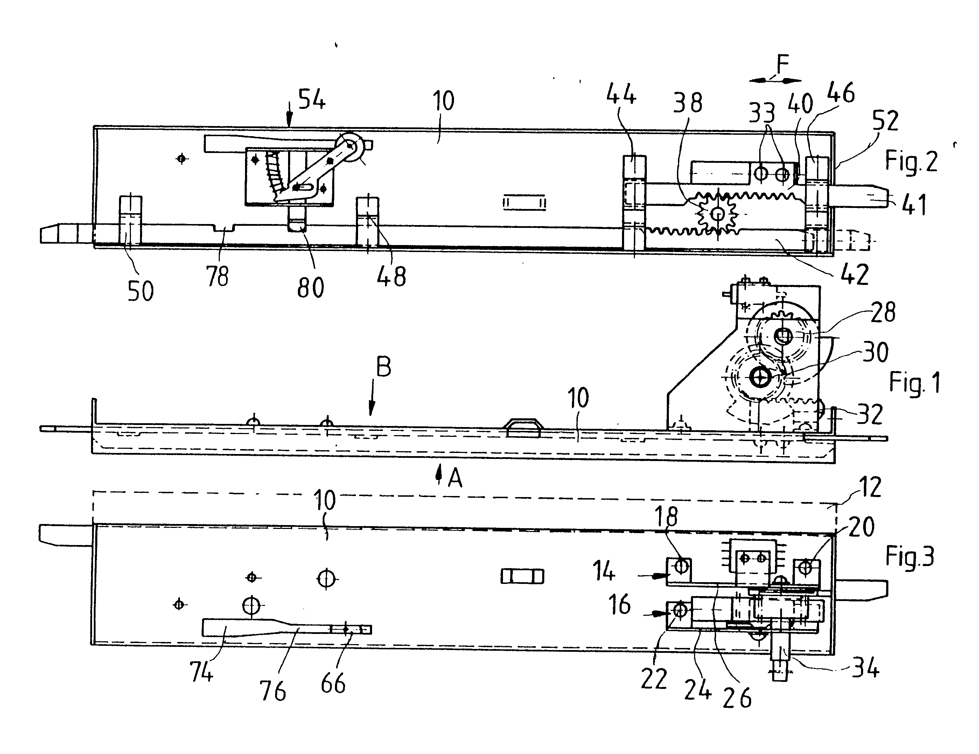

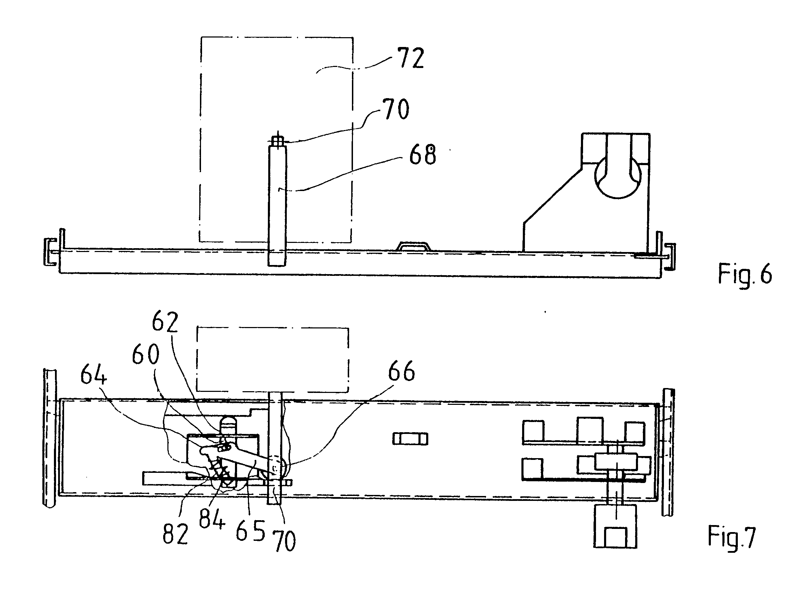

Die Vorrichtung gemäß Fig. 1 besitzt eine aus abgekantetem Blech gebildete Halteleiste 10, die Teil eines nicht näher dargestellten Einschubes 12 (nur strichliert dargestellt) ist. Auf der Oberseite der Halteleiste 10 ist eine Halterungsvorrichtung 14 und 16 mittels Schraubverbindungen 18, 20, 22 (die vierte Schraubverbindung ist nicht sichtbar) befestigt, die aus zwei nebeneinander und in Abstand zueinander angeordneter, senkrecht zur Halteleiste 10 verlaufender Tragblechen 24 und 26 gebildet ist. Zwischen diesen beiden Tragblechen 24 und 26 befindet sich ein Getriebe, das zwei miteinanderkämmende Zahnräder 28 und 30 aufweist, von denen das Zahnrad 30 mit einer Zahnstange 32 kämmt. An dem Zahnrad 28 greift eine Betätigungswelle 34 ein, die mit einem Schaltknebel 36 zum manuellen Antrieb des Getriebes 28/30/32 betätigbar ist. Die Zahnstange 32 ist mittels Verbindungselementen 33 mit einer unterhalb der Halteleiste 10 angeordneten und geführten Zahnstange 40 fest verbunden, derart, daß die Zahnstange 40 bei Verdrehung des Zahnrades 30 und damit Verschiebung der Zahnstange 32 gleichzeitig auch die Zahnstange 40 in Doppelpfeilrichtung F - F verschiebt. Die Zahnstange 40 kämmt mit einem Ritzel 38, das ortsfest gelagert ist, und das Ritzel 38 kämmt mit einer von der Zahnstange 40 aus gesehen jenseits liegenden zweiten Zahnstange 42. Die Zahnstange 40 ist mittels Führungen 44 und 46 geführt, wogegen die Zahnstange 42 zusätzlich noch durch Führungen 48 und 50 geführt ist. Die Zahnstange 40 ist relativ kurz und die Zahnstange 42 überdeckt praktisch die gesamte Halteleiste 10. Im entriegelten Zustand befindet sich das Ende 41 der Zahnstange 40 innerhalb der Endkante 52, oder ragt nur, wie aus Fig. 7 ersichtlich ist, geringfügig darüber hinaus, wobei die Zahnstange 42 ebenfalls nur geringfügig beidseitig über die Zahnstange hinaus greift .

Etwa im linken Bereich der Halteleiste 10 ist eine Blockierungsvorrichtung 54 ersichtlich. Diese Blockierungsvorrichtung besitzt eine quer zur Bewegungsrichtung der Zahnstange 42 verlaufende Verriegelungsstange 60, an der ein senkrecht dazu und nach oben weisender Zapfen 62 angebracht ist, der in einem Langloch 64 in einem Übertragungshebel 65 geführt ist bzw. in dieses eingreift. Der Übertragungshebel 65 trägt am entgegengesetzten Ende eine Rolle 66, die mit einem aus der Figur 6 ersichtlichen Hebel 68, der an der Schaltwelle 70 eines nur strichliert dargestellten Schaltgerätes 72 befestigt ist, zusammenwirkt.

Die Halteleiste 10 besitzt einen langgestreckten Schlitz 74, der sich hin zum Getriebe in einen Bereich 76 verengt, unterhalb welchem bzw. durch welchem hindurch die Rolle 66 teilweise zu sehen ist.

Die Zahnstange 42 besitzt zwei in Abstand zueinander angeordnete Ausnehmungen 78 und 80, in die die Verriegelungsstange 60 eingreifen kann; in Fig. 2 ist dargestellt, wie die Verriegelungsstange 60 in die Ausnehmung 80 zur Verriegelung der Zahnstange 42 eingreift.

Der Übertragungshebel 65 besitzt einen gebogenen Fortsatz 82, der zur Führung des Übertraungshebels 65 dient und unter dem Druck einer Feder 84 im Uhrzeigersinn um den Zapfen 62 herum beaufschlagt ist. Die Feder 84 hat dann die Aufgabe, in einer bestimmten Stellung, wie weiter unten erläutert werden soll, den Zapfen 62 und damit die Verriegelungsstange 60 in eine der beiden Ausnehmungen 78 und 80 zu drücken.

Die Wirkungsweise ist nun wie folgt:

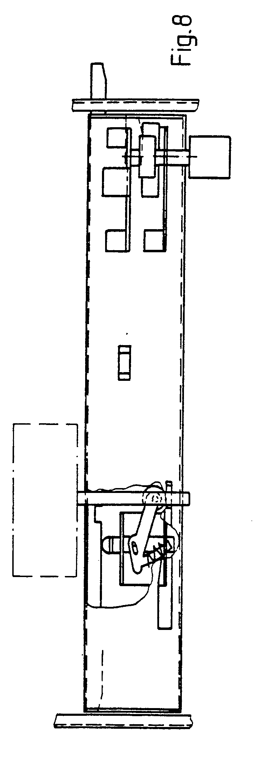

Durch Betätigung des Schaltknebels 36 wird also über das Getriebe 28, 30, 32 die Zahnstange 40 in Pfeilrichtung F - F verfahren und über das Ritzel 38 wird auch die Zahnstange 42 verfahren. Wenn sich der Schalter in Ausschaltstellung befindet, siehe Fig. 6, in der der Hebel 68 unten in den Schlitz 74/76 eingreift, dann wirkt der Hebel 68 auf die Rolle 66, wodurch der Übertragungshebel 65 verdreht wird und über den Zapfen 62 die Stange aus der in Fig. 5 gezeigten Stellung, in der sie in die Nut 80 eingreift, in die Stellung bewegt, wie sie in der Fig. 8 bspw. dargestellt ist. Durch diese Bewegung der Verriegelungsstange 60 überdeckt, wie man aus der Fig. 7 erkennen kann, die Verriegelungsstange 60 auch den Schlitz 74, 76, so daß der Hebel 68 am Schalter beim Verdrehen der Schaltwelle 70 gegen die Verriegelungsstange 60 anschlägt. Dadurch wird der Hebel 68 in dem Bereich 76 des Schlitzes zwischen dem rechten (siehe Fig. 7) Ende des Schlitzes und der Verriegelungsstange 60 festgehalten. Ein Einschalten des Schalters in dieser Stellung ist nicht möglich: Ein Einschalten des Schalters ist erst dann möglich, wenn durch Verdrehen des Schaltknebels 36 die Verriegelungsstange 60 in eine der Ausnehmungen 80 oder 78 eingreifen kann. Aufgrund der Druckfeder 84 wird der Übertragungshebel 65 ja in Richtung Eindrücken der Verriegelungsstange 60 in die Ausnehmungen 78 und 80 beaufschlagt, und sobald bei Verschiebung der Zahnstange 42 eine der Ausnehmungen 78 und 80 mit der Verriegelungsstange 60 fluchtet, werden die Kraft der Feder 84 und die Sperre für den Einschaltvorgang freigegeben; der Schlitz 74, 76 ist frei und dadurch kann die Schaltwelle 70 und der Hebel 68 in Einschaltrichtung verdreht werden.

Mit der oben beschriebenen Verriegelung über die beiden Zahnstangen 40 und 42 kann der Einschub in der Stellung vollständig eingeschoben, in einer sogenannten Prüf- oder Teststellung verriegelt werden. Die Verriegelung ist darüberhinaus auch abhängig von der Stellung der Schaltwelle; bspw. kann die Verriegelungvorrichtung nicht betätigt werden, wenn der Schalter in Einschaltstellung ist. In diesem Falle nämlich greift die Verriegelungsstange 60 in die Ausnehmung 80 ein. Eine Verstellung der Verriegelungsvorrichtung ist erst dann möglich, wenn der Hebel 68 in den Schlitz eingefahren ist und auf die Rolle 66 derart einwirkt, daß sie außerhalb des Bereiches des Schlitzes liegt (aus der Stellung gemäß Fig. 2 in die Stellung gemäß Fig. 7). Dadurch nämlich wird die Verriegelungsstange 60 aus den Ausnehmungen 78 und 80 herausgezogen. Die Verriegelungsvorrichtung kann damit verriegelt werden. Dies hat zur Folge, daß die Verriegelungsvorrichtung immer nur dann betätigt werden kann, wenn der Schalter ausgeschaltet ist.

**Patentansprüche**

1. Verriegelungsvorrichtung zur Verriegelung eines Einschubes in einem Einschubfach eines elektrischen Schaltschrankes in wenigstens einer Stellung, welcher Einschub wenigstens ein von außen mittels eines Schaltknebels (36) über eine Schaltwelle (70) betätigbares Schaltgerät und wenigstens ein Steuer- und ein Regelgerät enthält und der geführt in das Einschubfach einführbar ist, mit einem bekannten Stangengetriebe (41, 38, 42) mit zwei mittels einer Welle gegeneinander verschiebbaren Stangen (41, 42), die in Verriegelungsstellung beidseitig den Einschub überragen und in entriegelter Stellung innerhalb der Kanten des Einschubes verbleiben, und mit einer Blockiervorrichtung, dadurch gekennzeichnet, daß das Stangengetriebe (41, 38, 42) ein Zahnstangengetriebe mit zwei Zahnstangen (41, 42) und die Welle (38) als beide Zahnstangen antreibendes Ritzel ausgebildet ist, und daß die Blockiervorrichtung abhängig von der Stellung der Schaltwelle (70) des Schaltgerätes die Verriegelung blockiert, in dem eine von der Schaltwelle betätigte Verriegelungsstange (60) in eine von wenigstens einer Ausnehmung (78, 80) an einer der Zahnstangen (42) in Eingriff bringbar ist, wobei die Verriegelungsstange (60) selbst wiederum die Schaltwelle (70) dann in Ausschaltstellung festhält, wenn sich die Verriegelungsvorrichtung und damit die Zahnstangen (41, 42) außerhalb vorbestimmter Stellungen befinden.

2. Verriegelungsvorrichtung nach Anspruch 1, dadurch gekennzeichnet, daß am vorderen Bereich des Einschubes eine Halteleiste (10) vorgesehen ist, an der die Verriegelungsvorrichtung und die Blockiervorrichtung angeordnet sind.

3. Verriegelungsvorrichtung nach einem der Ansprüche 1 oder 2, dadurch gekennzeichnet, daß auf der Oberseite der Halteleiste (10) ein, durch den Schaltknebel (36) betätigbares Getriebe (28, 30, 32) vorgesehen ist, das auf das Zahnstangengetriebe zur Verschiebung der beiden Zahnstangen (41, 42) gegeneinander einwirkt.

4. Verriegelungsvorrichtung nach Anspruch 3, dadurch gekennzeichnet, daß das Getriebe zur Betätigung der beiden Zahnstangen (41, 42) zwischen zwei auf der Halteleiste (10) befestigten, senkrecht zu dieser verlaufenden, quasi ein Gehäuse bildenden Tragblechen (24, 26) geführt und gehaltert ist.

5. Verriegelungsvorrichtung nach einem der vorigen Ansprüche, dadurch gekennzeichnet, daß am Schaltgerät (72) ein mit der Schaltwelle (70) fest verbundener Hebel (68) vorgesehen ist, der in ausgeschaltetem Zustand des Schaltgerätes in die Blockiervorrichtung eingreift und diese in dem die Verriegelungsvorrichtung blockierenden Zustand festhält.

6. Verriegelungsvorrichtung nach Anspruch 5, dadurch gekennzeichnet, daß die Blockiervorrichtung mit der unterhalb der Halteleiste (10) quer zur Bewegungsrichtung der Zahnstangen (41, 42) verlaufenden und geführt verschiebbaren Verriegelungsstange (60) einen mit der Verriegelungsstange gelenkig verbundenen Übertragungshebel (65) umfaßt, der mit einem ersten Ende in den Bewegungsweg des mit der Schaltwelle (70) verbundenen Hebels (68) eingreift und mit diesem bei einem Schaltvorgang in Eingriff gelangt, so daß die Verriegelungsstange bei einer Ausschalthandlung außer Eingriff mit einer der beiden Zahnstangen gelangt und diese so freigibt.

7. Verriegelungsvorrichtung nach Anspruch 6, dadurch gekennzeichnet, daß der Übertragungshebel (65) als Doppelhebel ausgebildet und um den Anlenkpunkt an der Verriegelungsstange (60) drehbar ist, und daß auf das andere Ende auf einer Seite der Anlenkstelle eine Feder (84) so einwirkt, daß das eine, erste Ende in die Bewegungsbahn des mit der Schaltwelle verbundenen Hebels eingedrückt ist.

8. Verriegelungsvorrichtung nach Anspruch 7, dadurch gekennzeichnet, daß zur Verringerung von Reibungswirkungen am ersten Ende des Übertragungshebels (65) eine Rolle (66) drehbeweglich angeordnet ist.

9. Verriegelungsvorrichtung nach einem der vorigen Ansprüche, dadurch gekennzeichnet, daß in der Halteleiste (10) ein Schlitz (74, 76) vorgesehen ist, in den der mit der Schaltwelle (70) verbundene Hebel (68) bei einem Ausschaltvorgang eingreift und dabei mit dem Übertragungshebel (65) und der daran angeordneten Rolle (66) zusammenwirkt.

10. Verriegelungsvorrichtung nach Anspruch 9, dadurch gekennzeichnet, daß der Schlitz (74, 76) zwei Bereiche mit unterschiedlicher Breite aufweist, wobei der mit der Schaltwelle (70) verbundene Hebel (68) beim Ausschaltvorgang zuerst in den Bereich (74) mit größerer Breite eintaucht und im Bereich (76) mit geringerer Breite bei weiterem Ausschalten geführt ist.

11. Verriegelungsvorrichtung nach einem der vorigen Ansprüche, dadurch gekennzeichnet, daß das Getriebe (28, 30, 32) an einem Ende der Halteleiste und die Blockiervorrichtung in der Nähe des anderen Endes angeordnet ist und daß die eine der beiden Zahnstangen (42) die gesamte Länge der Halteleiste übergreift und mit den Ausnehmungen (78, 80) im Bereich der Blockiereinrichtung versehen ist.

## Claims

1. Locking device for locking a slide-in unit in a slide-in compartment of an electrical switch cabinet in at least one position, which slide-in unit contains at least one switchgear adapted to be operated from outside by means of a switch handle (36) with the aid of a switch shaft (70) and at least one control means and one feedback control means and which is adapted to be guidedly inserted into the slide-in compartment, said device comprising a known rod drive mechanism (41, 38, 42) having two rods (41, 42) which are displaceable oppositely to each other by means of a shaft and which in the locking position project beyond the slide-in unit on both sides and in the unlocked position remain inside the edges of the slide-in unit, and further comprising a securing device, characterized in that the rod drive mechanism (41, 38, 42) is constructed as a rack-and-pinion mechanism comprising two racks (41, 42) and the shaft (38) is constructed as a pinion driving both racks, and that in dependence on the position of the switch shaft (70) of the switchgear the securing device secures the locking through a locking rod (60) operated by the switch shaft and adapted to be brought into engagement with one of at least one recess (78, 80) in one (42) of the racks, while the locking rod (60) itself in turn holds the switch shaft (70) in the off position when the locking device and consequently also the racks (41, 42) are situated outside predetermined positions.

2. Locking device according to claim 1, characterized in that a holding strip (10) is provided in the front region of the slide-in unit to mount the locking device and the securing device.

3. Locking device according to one of claims 1 or 2, characterized in that a gear unit (28, 30, 32) adapted to be operated by the switch handle (36) is provided on the upper face of the holding strip (10) and acts on the rack-and-pinion mechanism to displace the two racks (41, 42) oppositely to each other.

4. Locking device according to claim 3, characterized in that the gear unit for operating the two racks (41, 42) is guided and held between two carrier plates (24, 26) which are fastened on the holding strip (10), extend at right angles to the latter and practically form a casing.

5. Locking device according to one of the preceding claims, characterized in that a lever (68) made fast to the switch shaft (70) is provided on the switchgear (72) and, when the latter is in the off position, engages in the securing device to hold the latter fast in the position securing the locking device.

6. Locking device according to Claim 5, characterized in that the securing device embraces, by means of the locking rod (60), which extends beneath the holding strip (10) and transversely to the direction of movement of the racks (41, 42) and which is guidedly displaceable, a transmission lever (65) which is pivoted to the locking rod and which by a first end comes into the path of movement of the lever (68) joined to the switch shaft (70) and comes into engagement with said lever when a switching operation is carried out, so that during a circuit-breaking operation the locking rod comes out of engagement with one of the two racks and thus frees this rack.

7. Locking device according to claim 6, characterized in that the transmission lever (65) is in the form of a double lever and is rotatable about the pivot point on the locking rod (60), and that a spring (84) acts on the other end, on one side of the pivot point, in such a manner that the one (first) end is pushed into the path of movement of the lever joined to the switch shaft.

8. Locking device according to Claim 7, characterized in that in order to reduce the effect of friction a roller (66) is mounted for rotation on the first end of the transmission lever (65).

9. Locking device according to one of the preceding claims, characterized in that in the holding strip (10) a slot (74, 76) is provided, in which the lever (68) joined to the switch shaft (70) engages during a circuit-breaking operation, at the same time cooperating with the transmission lever (65) and the roller (66) mounted on the latter.

10. Locking device according to Claim 9, characterized in that the slot (74, 76) comprises two regions of different widths, while the lever (68) joined to the switch shaft (70) first engages in the region (74) of greater width during the circuit-breaking operation and is guided in the region (76) of smaller width as the circuit-breaking operation continues.

11. Locking device according to one of the preceding claims, characterized in that the gear unit (28, 30, 32) is disposed at one end of the holding strip and the securing device is disposed near the other end, and that one (42) of the two racks extends over the entire length of the holding strip and is provided with the recesses (78, 80) in the region of the securing device.

## Revendications

1. Dispositif de verrouillage d'un tiroir dans un compartiment d'une armoire électrique dans au moins une position, ce tiroir comportant au moins un organe de commutation actionnable de l'extérieur au moyen d'une manette (36), par l'intermédiaire d'un arbre de commutation (70), et au moins un organe de commande et un organe de réglage, le tiroir pouvant être introduit de manière guidée dans le compartiment, dispositif comprenant un engrenage de tiges connu (41, 38, 42) à deux tiges, qui sont capables de coulisser l'une par rapport à l'autre à l'aide d'un arbre, qui dépassent du tiroir des deux côtés en position de verrouillage et qui restent à l'intérieur des bords du tiroir en position déverrouillée, et un dispositif de blocage, caractérisé en ce que l'engrenage de tiges (41, 38, 42) est un engrenage à crémaillère présentant deux crémaillères (41, 42), en ce que l'arbre (38) est réalisé sous la forme d'un pignon entraînant les deux cremaillères, et en ce que le dispositif de blocage bloque le verrouillage en fonction de la position de l'arbre de commutation (70) de l'organe de commutation, dans lequel une tige de verrouillage (60) actionnée par l'arbre de commutation peut être amenée en prise dans au moins un évidement (78, 80) prévu sur une des crémaillères (42), la tige de verrouillage (60) elle-même maintenant à son tour l'arbre de commutation (70) en position hors circuit lorsque le dispositif de verrouillage et avec lui les crémaillères (41, 42) se trouvent en dehors de positions prédéterminées.

2. Dispositif de verrouillage suivant la revendication 1, caractérisé en ce que, sur la zone avant du tiroir, est prévue une barre de support (10) sur laquelle sont agencés le dispositif de verrouillage et le dispositif de blocage.

3. Dispositif de verrouillage suivant l'une des revendications et 2, caractérisé en ce qu'il est prévu, sur la face supérieure de la barre de support (10), un engrenage (28, 30, 32) qui peut être actionné par la manette de commutation (36) et qui agit sur l'engrenage à crémaillère pour déplacer les deux crémaillères (41, 42) l'une par rapport à l'autre.

4. Dispositif de verrouillage suivant la revendication 3, caractérisé en ce que l'engrenage d'actionnement des deux crémaillères (41, 42) est guidé et maintenu entre deux plaques de support (24, 26) qui sont fixées sur la barre de support (10), sont disposées perpendiculairement à celle-ci et forment quasiment un boîtier.

5. Dispositif de verrouillage suivant l'une des revendications précédentes, caractérisé en ce qu'il est prévu, sur l'organe de commutation (72), un levier (68) qui est relié de manière fixe à l'arbre de commutation (70), entre en prise dans le dispositif de blocage à l'état hors circuit de l'organe de commutation et retient le dispositif de blocage à l'état de blocage du dispositif de verrouillage.

6. Dispositif de verrouillage suivant la revendication 5, caractérisé en ce que le dispositif de blocage comporte, avec la tige de verrouillage (60) qui s'étend en dessous de la barre de support (10) transversalement à la direction de déplacement des crémaillères (41, 42) et est capable de coulisser de manière guidée, un levier de transmission (65) qui est relié de manière articulée à la tige de verrouillage, pénètre par une première extrémité dans la voie de déplacement du levier (68) relié à l'arbre de commutation (70) et parvient en prise avec ce levier lors d'un processus de commutation de façon que la tige de verrouillage parvienne, lors d'une manipulation de mise hors circuit, hors de prise avec une des deux crémaillères et libère ainsi celle-ci.

7. Dispositif de verrouillage suivant la revendication 6, caractérisé en ce que le levier de transmission (65) est réalisé sous la forme d'un double levier et est capable de pivoter autour du point d'articulation sur la tige de verrouillage (60) et en ce que, à l'autre extrémité, un ressort (84) agit d'un côté de l'emplacement d'articulation de façon que l'une des extrémités, la première, soit enfoncée dans la voie de déplacement du levier relié à l'arbre de commutation.

8. Dispositif de verrouillage suivant la revendication 7, caractérisé en ce qu'un galet (66) est agencé de manière rotative, à la première extrémité du levier de transmission (65), en vue de réduire les effets de frottement.

9. Dispositif de verrouillage suivant l'une des revendications précédentes, caractérisé en ce que, dans la barre de support (10), il est prévu une fente (74, 76) dans laquelle le levier (68) relié à l'arbre de commutation (70) pénètre lors d'un processus de mise hors circuit et coopère avec le levier de transmission (65) et le galet (66) agencé dessus.

10. Dispositif de verrouillage suivant la revendication 9, caractérisé en ce que la fente (74, 76) présente deux zones de largeurs différentes, le levier (68) relié à l'arbre de commutation (70) plongeant tout d'abord, lors du processus de mise hors circuit, dans la zone (74) de plus grande largeur et étant guidé au cours de la poursuite de la mise hors circuit dans la zone (76) de largeur plus faible.

11. Dispositif de verrouillage suivant l'une des revendications précédentes, caractérisé en ce que l'engrenage (28, 30, 32) est agencé à une extrémité de la barre de support, en ce que le dispositif de blocage est agencé à proximité de l'autre extrémité et en ce que l'une des deux crémaillères (42) recouvre la totalité de la longueur de la barre de support et est pourvue des évidements (78, 80) dans la zone du dispositif de blocage.

Fig. 1 · Fig. 2 · Fig. 3

Fig. 4

Fig. 5

EP 0 109 544 B1

Fig. 6

Fig. 7

Fig.8